# EUROPÄISCHE PATENTANMELDUNG

(11) **EP 1 223 419 A2**
(43) Veröffentlichungstag der Anmeldung: **17.07.2002**
(21) Anmeldenummer: 01129701.7
(22) Anmeldetag: 13.12.2001
(51) Int. Cl.: G01L 5/00

(54) **Anordnung zur Erfassung physikalischer Messgrössen, insbesondere an einem Radlager eines Kraftfahrzeuges**

(30) Priorität: 11.01.2001 DE 10100891
(71) Anmelder: ROBERT BOSCH GMBH, 70442 Stuttgart (DE)
(72) Erfinder: Dukart, Anton, 70839 Gerlingen (DE); Arndt,Dietmar,Dr., 74343 Kleinsachsenheim (DE); Hillenbrand, Stefan, Dr., 71696 Moeglingen (DE)

(57) **Zusammenfassung**

Es wird eine Anordnung zur Erfassung physikalischer Messgrößen, insbesondere von auf ein Radlager eines Kraftfahrzeuges einwirkenden Kräften, Spannungen und/oder Beschleunigungen, vorgeschlagen. Diese Anordnung weist ein Radiallager (14, 15), ein mit dem Radiallager (14, 15) verbundenes, die physikalische Messgröße hervorrufendes drehbares Bauteil (13, 24), eine hinsichtlich der Messgröße sensitive Sensiereinrichtung und eine weitere Einrichtung (16, 17, 31) auf, mit der die Rotationsgeschwindigkeit des drehbaren Bauteils (13, 24) beeinflussbar ist. Weiter ist ein mit dem Radiallager (14, 15), der Sensiereinrichtung und der weiteren Einrichtung (16, 17, 31) in Verbindung stehendes Bauelement (25) vorgesehen, über das die von dem drehbaren Bauteil (13, 24) hervorgerufene physikalische Messgröße der Sensiereinrichtung zumindest nahezu vollständig zuführbar ist. Bevorzugt ist das Bauelement (25) derart angeordnet, dass die Sensiereinrichtung ein Ausgangssignal erzeugt, das unabhängig von der Beeinflussung der Rotationsgeschwindigkeit des drehbaren Bauteils (13, 24) durch die weitere Einrichtung (16, 17, 31) der von dem drehbaren Bauteil (13, 24) hervorgerufenen physikalischen Messgröße stets proportional ist.

## Beschreibung

Die Erfindung betrifft eine Anordnung zur Erfassung physikalischer Messgrößen, insbesondere von Kräften, Drehmomenten, Spannungen und/oder Beschleunigungen an einem Radlager eines Kraftfahrzeuges, nach der Gattung des Hauptanspruches.

### Stand der Technik

In der Kraftfahrzeugtechnik wird es zunehmend wichtiger, die von der Fahrbahn auf das Kraftfahrzeug über die Reifen bzw. das Radlager übertragenen Bewegungszustände des Kraftfahrzeuges, beispielsweise Kräfte, Drehmomente, Spannungen oder Beschleunigungen, möglichst vollständig und direkt am Radlager zu erfassen.

Dazu ist in der unveröffentlichten Anmeldung DE 100 41 098.7 eine Sensoranordnung in einem Wälzlager vorgeschlagen worden, mit der während der Bewegung eines in dem Wälzlager geführten drehbaren Bauteils eine Erfassung von auf das Wälzlager übertragenen Messgrößen, insbesondere Kräften oder Drehmomenten, erfolgt. Insbesondere ist dort vorgeschlagen worden, Dehnungsmessstreifen in das Wälzlager zu integrieren, mit denen mechanische Spannungen, denen eine Lagerschale des Wälzlagers ausgesetzt ist, im Zusammenwirken mit ebenfalls in das Wälzlager integrierten Elektronikbausteinen detektiert werden können. Die Dehnungsmessstreifen sind dabei vor allem im Bereich der äußeren Lagerschale des Wälzlagers sowie teilweise auch im Bereich des Lagerflansches oder im Bereich kraftführender Teile der Befestigung der feststehenden Lagerteile des Wälzlagers angeordnet und beispielsweise in Form von Messbrücken oder Spannungsteilerschaltungen zusammengeschaltet. Im Übrigen ist aus DE 100 41 098.7 bekannt, neben oder alternativ zu Dehnungsmessstreifen piezoresistive Schichtwiderstände einzusetzen.

In der unveröffentlichten Anmeldung DE 100 41 093.6 ist weiter ebenfalls eine Sensoranordnung in einem Wälzlager vorgeschlagen worden, mit der auf die feststehende Lagerschale des Wälzlagers wirkende Dehnkräfte erfassbar sind, wobei die eingesetzten Sensorelemente beispielsweise zu Dehnungsmesswiderstandsmessbrücken zusammengeschaltete Dehnungsmesswiderstände sind.

Mit den aus den vorstehenden Anmeldungen bekannten Sensorelementen ist somit prinzipiell die Erfassung von Kräften, Drehmomenten bzw. Dehnungen oder Stauchungen, die auf ein Wälzlager einwirken, bekannt.

Nachteilig bei bekannten Wälzlagern mit integrierter Sensiereinrichtung ist der stets vorhandene Kraftnebenschluss über die Bremsanlage des Kraftfahrzeuges, so dass bei einem Bremsvorgang diejenigen Kräfte, die von der Straße auf das Fahrzeug übertragen werden, nicht mehr mit den in dem Radlager auftretenden und dort gemessenen Kräften identisch sind. Insbesondere führt ein solcher unerwünschter Kraftnebenschluss über die Bremsanlage dazu, dass von dem Reifen bzw. der Felge des Kraftfahrzeuges ausgehende Kräfte lediglich zum Teil auf das Radlager, gleichzeitig zum Teil aber auch auf die Bremsanlage übertragen werden, so dass die von der in dem Radlager integrierten Sensorik erfassten Messgrößen, insbesondere bei einem gleichzeitigen Betätigen der Bremse, nur eine eingeschränkte Aussagekraft hinsichtlich der tatsächlich auf den Reifen des Fahrzeuges einwirkenden Kräfte besitzen.

Aus der Patentanmeldung DE 195 37 808 A1 ist eine Radlagerung für Kraftfahrzeuge mit einem Wälzlager und einem damit verbunden Radflansch zum Befestigen der Radfelge und der Bremsscheibe bekannt. Dabei ist die Radlagerung so gestaltet, dass sie eine einfache, auch schwimmende Gestaltung der Bremsscheibe ermöglicht, und gleichzeitig stets eine ausreichende Belüftung der Bremsscheibe gewährleistet. Insbesondere ist dort vorgeschlagen worden, den Radflansch mit zwei axial zueinander parallel versetzten Bereichen zu versehen, die sich in Umfangsrichtung betrachtet abwechseln und jeweils Befestigungsmöglichkeiten für die Bremsscheibe oder die Radfelge besitzen.

Aufgabe der vorliegenden Erfindung war die möglichst präzise Messung einer von einem drehbaren Bauteil, beispielsweise einem Reifen eines Kraftfahrzeuges, ausgehenden und auf ein Radiallager, beispielsweise ein Radlager eines Kraftfahrzeuges, übertragenen physikalischen Messgröße, wobei als Messgröße insbesondere eine übertragene Kraft, eine übertragene mechanische Spannung, ein Drehmoment und/oder eine Beschleunigung relevant ist. Weiter war es Aufgabe der Erfindung, diese Messung unabhängig von der Betätigung der Bremse zu ermöglichen, und somit stets eine zuverlässige Aussage über die gesamte, von dem drehbaren Bauteil ausgehende Messgröße zu erhalten.

### Vorteile der Erfindung

Die erfindungsgemäße Anordnung zur Erfassung physikalischer Messgrößen hat gegenüber dem Stand der Technik den Vorteil, dass beispielsweise ein gesamter, von dem drehbaren Bauteil wie einem Reifen eines Kraftfahrzeuges ausgehender Kraftfluss durch das zusätzlich vorgesehene Bauelement geleitet wird, das somit der Bündelung und der möglichst vollständigen Weiterleitung dieses Kraftflusses zu der damit in Verbindung stehenden Sensiereinrichtung dient.

Insbesondere wird durch dieses zusätzlich vorgesehene Bauelement zunächst zwar nicht ein an sich unerwünschter Kraftnebenschluss über die Bremsanlage beseitigt, dadurch aber, dass das zusätzliche Bauelement sowohl mit dem Radiallager als auch mit der weiteren Einrichtung, d.h. im konkreten Fall der Bremsanlage, in Verbindung steht, ist dieses sowohl den auf das Radiallager einwirkenden Kräften bzw. Drehmomenten oder mechanischen Spannungen als auch den auf die Bremseinrichtung einwirkenden Kräften ausgesetzt, so dass an diesem Bauelement dennoch die Gesamtheit der auf das drehbare Bauteil einwirkenden Kräfte, Drehmomente oder Spannungen Kräfte wirksam und damit messbar wird.

Vorteilhafte Weiterbildungen der Erfindung ergeben sich aus den in den Unteransprüchen genannten Maßnahmen.

So ist besonders vorteilhaft, dass durch die Anordnung des zusätzlichen Bauelementes erreicht wird, dass die Sensiereinrichtung stets ein Ausgangssignal erzeugt, dass unabhängig von der Beeinflussung der Rotationsgeschwindigkeit des drehbaren Bauteils, beispielsweise eines Reifens, durch die weitere Einrichtung, beispielsweise eine Bremsanlage, der von dem drehbaren Bauteil hervorgerufenen physikalischen Messgröße, beispielsweise einer Kraft oder einem Drehmoment, stets proportional ist.

Hinsichtlich der Form des vorgesehenen Bauelementes ist zur möglichst einfachen Verbindung mit der Sensiereinrichtung und einer möglichst einfachen Integration in die erfindungsgemäße Anordnung vorteilhaft, wenn dieses plattenförmig ausgebildet und auf der Rückseite des feststehenden Teils des Radiallagers zwischen dem Radiallager und die Verbindung des Radiallagers mit dem Kraftfahrzeug gewährleistenden Radträger angeordnet ist. Insbesondere ist vorteilhaft, wenn die vorgesehene Platte weitgehend entsprechend dem Radträger, d.h. in Form einer kreisförmigen metallischen Platte, ausgebildet ist.

Als sensitive Elemente in der Sensiereinrichtung eignen sich vorteilhaft bekannte dehnungsempfindliche Sensoren wie Dehnungsmessstreifen oder beispielsweise zu Dehnungsmesswiderstandsmessbrückenschaltungen zusammengeschaltete Anordnungen solcher Dehnungsmessstreifen. Weiter sind diese sensitiven Elemente vorteilhaft auf dem Umfang des zusätzlich vorgesehenen plattenförmigen Bauelementes verteilt bzw. auch auf den die Verbindung des Bauelementes mit dem Radiallager bzw. dem Radträger leistenden Flächen angeordnet.

### Zeichnungen

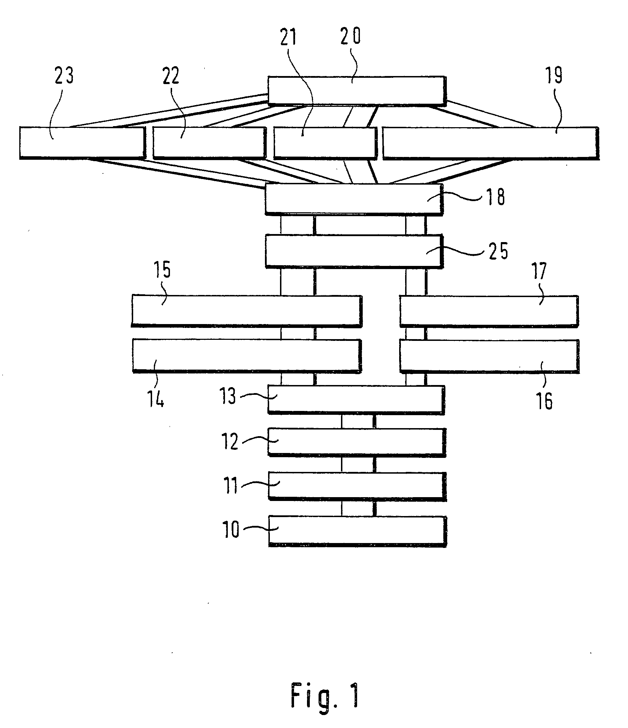

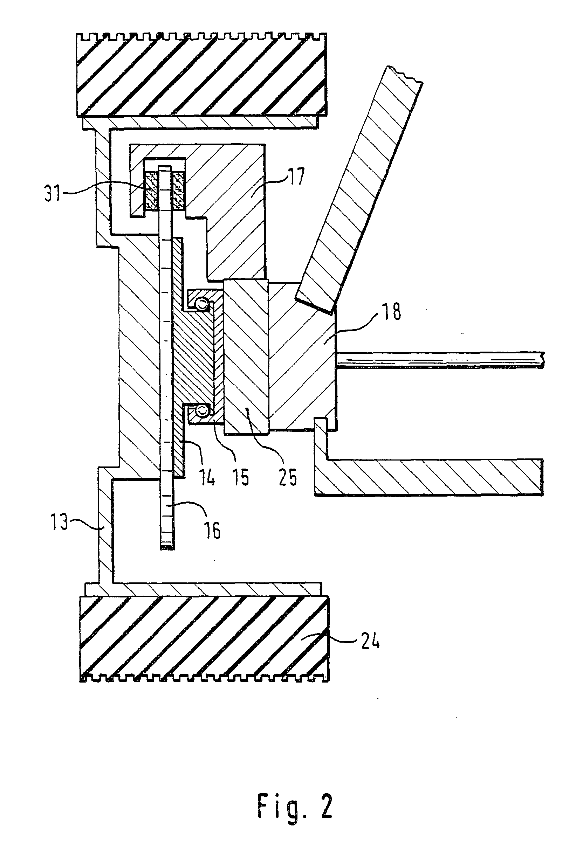

Die Figur 1 erläutert den prinzipiellen Kraftfluss bei einem Kraftfahrzeug von der Fahrbahn auf das Chassis bzw. die Karosserie gemäß der Erfindung. Die Figur 2 zeigt eine Prinzipskizze der erfindungsgemäßen Anordnung mit einem Reifen eines Kraftfahrzeuges, der über ein Radlager mit der Karosserie des Kraftfahrzeuges verbunden ist.

### Ausführungsbeispiele

Die Figur 1 erläutert den Kraftfluss von der Fahrbahn 10 auf die Karosserie 20 eines Kraftfahrzeuges im Fall einer erfindungsgemäßen Anordnung entsprechend dem mit Hilfe der Figur 2 erläuterten Ausführungsbeispiel, um daraus den Bewegungszustand des Fahrzeuges mit Hilfe einer Sensiereinrichtung zu analysieren,

Im Einzelnen werden dabei von der Fahrbahn 10 auf einen Reifen 24 des Kraftfahrzeuges einwirkende Kräfte, Drehmomente, mechanische Spannungen und/oder Beschleunigung zunächst von der Fahrbahn 10 auf den Reifenlatsch 11, von dort auf die Reifenseite 12 und schließlich auf die Felge 13 übertragen. Die Felge 13 ist dann weiter auf ihrer Innenseite zunächst mit einer Bremsscheibe 16 verbunden, die auf die Felge 13 aufgeschraubt ist.

Auf der der Felge 13 abgewandten Seite der Bremsscheibe 16 ist weiter ein drehendes Radlagerteil 14 vorgesehen, das mit der Bremsscheibe 16 oder der Felge 13 oder beidem verbunden, beispielsweise verschraubt, ist. Das drehbare Radlagerteil 14 steht darüber hinaus mit einem feststehenden Radlagerteil 15 in Verbindung, so dass das drehende Radlagerteil 14 mit dem feststehenden Radlagerteil 15 ein übliches Radiallager, insbesondere ein Wälzlager, bildet.

Auf der der Felge 13 bzw. der Bremsscheibe 16 abgewandten Seite des feststehenden Radlagerteils 15 ist ein Bauelement 25 in Form einer metallischen Adapterplatte vorgesehen, die einerseits auf ihrer Vorderseite mit dem feststehenden Radlagerteil 15 und andererseits mit einem Bremssattel 17 einer Bremsanlage des Kraftfahrzeuges verbunden ist. Bevorzugt ist der Bremssattel 17 mit der Seitenfläche des Bauelementes 25 verschraubt.

Der Bremssattel 17 steht weiter in bekannter Weise mit Bremsbeläge 31 in Verbindung, die in einer Umgebung der Bremsscheibe 16 angeordnet sind, so dass bei einer Betätigung der Bremsanlage des Kraftfahrzeuges über den Bremssattel 17 die Bremsbeläge 31 auf die Bremsscheibe 16 einwirken und eine Veränderung der Rotationsgeschwindigkeit des Reifens 24, d.h. eine Abbremsung des Kraftfahrzeuges, bewirken.

Auf der dem Radlager abgewandten Seite des Bauelementes 25 ist dieses mit einem üblichen Radträger 18 verbunden, der in bekannter Weise mit Querlenkern bzw. Längslenkern 19, einem Stabilisator 23, einer Spurstange 22, einer Federung 21 und schließlich darüber mit der Fahrzeugkarosserie 20 bzw. dem Chassis verbunden ist.

Durch die Anordnung gemäß Figur 2 wird somit hinsichtlich des Kraftflusses gemäß Figur 1 erreicht, dass zwar immer noch ein Kraftnebenschluss von der Felge 13 auf das drehende Radlagerteil 14 bzw. die Bremsscheibe 16 vorliegt, dass aber durch das zusätzlich vorgesehene Bauelement 25, das sowohl mit dem feststehenden Radlagerteil 15 als auch dem Bremssattel 17 verbunden ist, danach wieder eine Bündelung bzw. Zusammenführung des zuvor geteilten Kraftflusses gegeben ist, so dass das Bauelement 25 dem gesamten von der Felge 13 ausgehenden Kraftfluss ausgesetzt ist.

Daher ist durch eine mit dem Bauelement 25 verbundene, nicht dargestellte Sensiereinrichtung, die beispielsweise eine Anordnung von üblichen Dehnungsmessstreifen aufweist, unabhängig von der Beeinflussung der Rotationsgeschwindigkeit des Reifens 24 durch die Bremsanlage stets eine vollständige Erfassung einer von dem Reifen 24 hervorgerufenen physikalischen Messgröße, insbesondere einer Kraft, einer mechanischen Spannung oder eines Drehmomentes, gewährleistet, wobei dass das von der Sensiereinrichtung durch die einwirkende physikalische Messgröße erzeugte Ausgangssignal zudem stets dieser Messgröße proportional ist.

Im Übrigen ist mit Hilfe des Bauelementes 25 auch ein daran anliegendes Bremsmoment bzw. der Teil der Kräfte, die über die Bremsanlage des Kraftfahrzeuges an dieses Bauelement übertragen werden, separat messbar, um daraus beispielsweise Rückschlüsse über die Wirkung oder Funktionsfähigkeit der Bremse zu ziehen.

Hinsichtlich der konkreten Ausgestaltung der Sensiereinrichtung, die mit dem Bauelement 25 verbunden und insbesondere auf dessen Oberfläche angeordnet oder in diese integriert ist, sei auf die Anmeldungen DE 100 41 093.6 oder auf die Anmeldung DE 100 41 098.7 verwiesen, wo solche Sensiereinrichtungen und der Aufbau und die Funktion von Dehnungsmessstreifen oder Dehnungsmesswiderstandsbrückenschaltungen im Detail beschrieben sind.

## Patentansprüche

1. Anordnung zur Erfassung physikalischer Messgrößen, insbesondere von auf ein Radlager eines Kraftfahrzeuges einwirkenden Kräften, Spannungen und/oder Beschleunigungen, mit einem Radiallager, einem mit dem Radiallager verbundenen, die physikalische Messgröße hervorrufenden drehbaren Bauteil, einer hinsichtlich der Messgröße sensitiven Sensiereinrichtung und einer weiteren Einrichtung, mit der die Rotationsgeschwindigkeit des drehbaren Bauteils beeinflussbar ist, **dadurch gekennzeichnet, dass** ein mit dem Radiallager (14, 15), der Sensiereinrichtung und der weiteren Einrichtung (16, 17, 31) in Verbindung stehendes Bauelement (25) vorgesehen ist, über das die von dem drehbaren Bauteil (13, 24) hervorgerufene physikalische Messgröße zumindest nahezu vollständig der Sensiereinrichtung zuführbar ist.

2. Anordnung nach Anspruch 1, **dadurch gekennzeichnet, dass** das Bauelement derart angeordnet ist, dass die Sensiereinrichtung ein Ausgangssignal erzeugt, das unabhängig von der Beeinflussung der Rotationsgeschwindigkeit des drehbaren Bauteils (13, 24) durch die weitere Einrichtung (16, 17, 31), insbesondere unabhängig von einer von der weiteren Einrichtung (16, 17, 31) auf das drehbare Bauteil (13, 24) einwirkenden Kraft, der von dem drehbaren Bauteil (13, 24) hervorgerufenen physikalischen Messgröße stets proportional ist.

3. Anordnung nach einem der vorangehenden Ansprüche, **dadurch gekennzeichnet, dass** das Bauelement (25) eine Platte ist.

4. Anordnung nach Anspruch 3, **dadurch gekennzeichnet, dass** die Platte auf einer Seite mit einem feststehenden Teil des Radiallagers (15) und auf der anderen Seite mit einem Tragköper, insbesondere einem Radträger (18), verbunden ist.

5. Anordnung nach einem der vorangehenden Ansprüche, **dadurch gekennzeichnet, dass** die weitere Einrichtung (16, 17, 31) eine Bremsscheibe (16) und einen Bremssattel (17) aufweist, wobei der Bremssattel (17) mit dem Bauelement (25), insbesondere der Platte, und die Bremsscheibe (16) mit dem drehbaren Bauteil (13, 24) und/oder dem Radiallager (14, 15) verbunden ist.

6. Anordnung nach Anspruch 5, **dadurch gekennzeichnet, dass** die Bremsscheibe (16) zwischen dem drehbaren Bauteil (13, 24) und dem Radiallager (14, 15), insbesondere dem drehbaren Teil des Radiallagers (14), angeordnet ist.

7. Anordnung nach einem der vorangehenden Ansprüche, **dadurch gekennzeichnet, dass** die Sensiereinrichtung dehnungsempfindliche Sensoren wie Dehnungsmessstreifen und/oder Dehnungsmesswiderstandsmessbrückenschaltungen aufweist.

8. Anordnung nach einem der vorangehenden Ansprüche, **dadurch gekennzeichnet, dass** die Sensiereinrichtung zumindest bereichsweise auf das Bauelement (25) aufgebracht ist und/oder dieses bereichsweise umgibt.

9. Anordnung nach einem der vorangehenden Ansprüche, **dadurch gekennzeichnet, dass** mit der Sensiereinrichtung von dem drehbaren Bauteil (13, 24) hervorgerufene mechanische Spannungen, Dehnungen, Kräfte, Beschleunigungen oder Drehmomente erfassbar sind.

10. Anordnung nach einem der vorangehenden Ansprüche, **dadurch gekennzeichnet, dass** das drehbare Bauteil (13, 24) eine mit einem Reifen (24) versehene Felge (13) eines Kraftfahrzeuges ist.

11. Anordnung nach einem der vorangehenden Ansprüche, **dadurch gekennzeichnet, dass** das Radiallager (14, 15) ein Radlager eines Kraftfahrzeuges ist.
